# EUROPÄISCHE PATENTSCHRIFT

(11) **EP 1 919 661 B1**
(45) Veröffentlichungstag und Bekanntmachung des Hinweises auf die Patenterteilung: **08.10.2008**
(21) Anmeldenummer: 06776475.3
(22) Anmeldetag: 27.07.2006
(51) Int. Cl.: B23Q 17/22

(54) **POSITIONIEREINRICHTUNG FÜR SPAN ABHEBENDE WERKZEUGE IN WERKZEUGFUTTERALEN**
POSITIONING DEVICE FOR CUTTING TOOLS IN TOOL CASES
DISPOSITIF DE POSITIONNEMENT D'OUTILS D'USINAGE DANS DES MANDRINS

(30) Priorität: 27.07.2005 DE 202005011793 U
(43) Veröffentlichungstag der Anmeldung: 14.05.2008
(73) Patentinhaber: Haimer GmbH, 86568 Hollenbach-Igenhausen (DE)
(72) Erfinder: HAIMER, Franz, 86568 Igenhausen (DE); ZEITLMEIER, Josef, 86570 Sainbach (DE)
(74) Vertreter: Bockhorni & Kollegen
(86) Internationale Anmeldenummer: PCT/EP2006/007462
(87) Internationale Veröffentlichungsnummer: WO 2007/012492

(56) Entgegenhaltungen:
- DE-A1- 1 477 457
- DE-A1- 1 602 840
- DE-A1- 10 025 008

## Beschreibung

Die vorliegende Neuerung betrifft eine Positioniereinrichtung für Span abhebende Werkzeuge in Werkzeugfutteralen gemäß dem Oberbegriff von Anspruch 1.

In Span abhebenden Maschinen, wie Dreh- und Fräsmaschinen oder dgl., ist das Span abhebende Werkzeug in einem Werkzeugfutteral aufgenommen. Insbesondere bei Drehwerkzeugen, die aufgrund einer rechts- bzw. linksseitig wirkenden Schneide nicht rotationssymmetrisch aufgebaut sind, muss die Position des Drehwerkzeugs und damit der Schneide in Bezug auf das Werkstück exakt eingestellt werden, um eine präzise und definierte Bearbeitung des Werkstücks zu gewährleisten. Übliche Werkzeugfutterale weisen eine Mitnehmer- bzw. Indexnut auf, wodurch die Position des Werkzeugfutterals in der Dreh- bzw. Fräsmaschine festgelegt ist. Aus diesem Grunde kann die Positionierung des Werkzeugs in Bezug auf das Werkstück zumeist nicht über das Futteral vorgenommen werden, sondern muss beim Einpassen des Werkzeugs in das Werkzeugfutteral selbst geschehen.

Eine bekannte Positioniereinrichtung für die Schneide eines Drehwerkzeugs in einem Werkzeugfutteral besteht aus einer Aufnahme, in der das Werkzeugfutteral fixiert wird, und einer verschiebbaren Messeinheit, die in Kontakt mit der Schneide, des in das Werkzeugfutteral eingebrachten Drehwerkzeugs, bringbar ist. Der Taster der Messeinheit, der sich in Kontakt mit der Schneide befindet, zeigt dabei direkt die Winkelposition der Schneide in Bezug auf die Längsachse des Werkzeugfutterals an. Nachdem die gewünschte Winkelposition der Schneide manuell festgelegt wurde, wird das Werkzeugfutteral beispielsweise über einen Klemmhebel verriegelt und so das Drehwerkzeug in dem Werkzeugfutteral fixiert.

Nachteilig an dieser bekannten Positioniereinrichtung ist es, dass die Winkelposition der Schneide durch manuelles Drehen des Drehwerkzeugs in dem Futteral eingestellt wird, wobei dies in Abhängigkeit von der motorischen Feinfühligkeit des Einstellenden erfolgt, und die Einstellung der Winkelposition in dem Werkzeugfutteral erfolgt während dieses geöffnet ist. In diesem geöffneten Zustand des Werkzeugfutterals weist dieses jedoch einen größeren Öffnungsdurchmesser auf als im geschlossenen Zustand, weshalb (wenn das Werkzeugfutteral sich in einer horizontalen Lage befindet) das Werkzeug während des Schließvorgangs angehoben und zumeist auch um einen gewissen Winkel verdreht wird. Eine exakte Positionierung ist somit mit dieser bekannten Positioniereinrichtung nicht oder nur sehr schwer möglich. Ein weiterer Nachteil dieser bekannten Positioniereinrichtung besteht darin, dass diese nicht für Schrumpffutterale geeignet ist, da die Erwärmung des Schrumpffutterals und damit die Öffnung dieses Futterals nur über einen sehr kurzen Zeitraum erfolgen darf, der zumeist nicht ausreicht, eine exakte Positionierung des Werkzeugs in Bezug auf das Futteral vorzunehmen.

Hier setzt die vorliegende Neuerung an, die sich zur Aufgabe gestellt hat, eine Positioniereinrichtung der oben genannten Art bereit zu stellen, die eine einfachere und exaktere Positionierung eines Werkzeugs in einem Werkzeugfutteral ermöglicht und insbesondere auch für Schrumpffutterale geeignet ist.

Diese Aufgabe wird gelöst mit einer Positioniereinrichtung gemäß Anspruch 1. Bevorzugte und vorteilhafte Weiterbildungen dieser Positioniereinrichtung sind Gegenstand der abhängigen Ansprüche.

Die beanspruchte Neuerung umfasst neben einer Werkzeugfutteralaufnahme, in der Positionierungsmittel vorgesehen sind, die die Winkelposition des Werkzeugfutterals in Bezug auf die Aufnahme festlegen, zusätzlich eine Werkzeugaufnahme, in der das Werkzeug (beispielsweise die Schneide eines Drehwerkzeugs) in einer bestimmten Winkelposition in Bezug auf die Werkzeugaufnahme festlegbar ist. Dabei richtet die Werkzeugfutteralaufnahme das Werkzeugfutteral mit seiner Längsachse entlang einer bestimmten Achse aus und die Werkzeugaufnahme richtet das Werkzeug mit seiner Längsachse entlang einer anderen bestimmten Achse aus. Weiterhin ist vorgesehen, dass Werkzeugfutteralaufnahme und Werkzeugaufnahme so zueinander angeordnet sind, dass beim Einführen des Werkzeugs in das Werkzeugfutteral die Ausrichtungsachsen von Werkzeugfutteral und Werkzeug identisch sind und die Winkelpositionen von Werkzeug und Werkzeugfutteral zueinander festgelegt sind.

Die vorliegende Positioniereinrichtung zeichnet sich dadurch aus, dass das Werkstück in der Werkzeugaufnahme in einer definierten Winkelposition exakt positioniert werden kann und beim Einfügen des Werkzeugs in das Werkzeugfutteral die Winkelpositionen.von Werkzeugfutteral und Werkzeug definiert festgelegt sind. Die Positionierung des Werkzeugs erfolgt nicht direkt in dem Werkzeugfutteral, sondern schon vorher in der Werkzeugaufnahme. Die vorliegende Positioniereinrichtung ist daher insbesondere auch für Schrumpffutterale geeignet, da das Ausrichten des Werkzeugs in der Werkzeugaufnahme mit aller notwendigen Sorgfalt, die auch eine längere Zeit in Anspruch nehmen kann, durchgeführt werden kann, während das Einfügen des Werkzeugs in das Werkzeugfutteral sehr schnell erfolgen kann. Andererseits ist durch die vorliegende Positioniereinrichtung gewährleistet, dass beim Einfügen des Werkzeugs in das Werkzeugfutteral ihre Längsachsen identisch sind, also diese beiden Teile zueinander konzentrisch angeordnet sind. Auf diese Weise wird eine mögliche Veränderung der Position des Werkzeugs in dem Werkzeugfutteral während des Arretiervorganges bei Spannzangen- und Klemmfutteralen minimiert und bei Schrumpffutteralen gänzlich verhindert. Insgesamt lässt sich mit der vorliegenden Positioniereinrichtung die Positionierung eines Werkzeugs in einem Werkzeugfutteral wesentlich einfacher und exakter vornehmen und ist insbesondere weniger von motorischen Fähigkeiten des Bedienpersonals abhängig.

In einer vorteilhaften Ausgestaltung ist die Werkzeugaufnahme an einer Stütze angeordnet, deren Längsachse zu den Längsachsen des Werkzeugfutterals und des Werkzeugs parallel ist und wobei die Werkzeugaufnahme entlang, d.h. in Richtung der Stütze verschiebbar ist. Weiterhin kann vorgesehen sein, dass entweder die Werkzeugaufnahme um die Längsachse der Stütze verschwenkbar angeordnet oder die Stütze selbst um ihre Längsachse rotierbar ist. Auf diese Weise kann das Werkzeug von einer Position, in der die Längsachsen des Werkzeugs und des Werkstücks nicht identisch sind (also übereinander liegen), in eine Position verschwenkt werden, in der diese Achsen identisch sind. Alternativ oder gleichzeitig kann die Werkzeugaufnahme in Bezug auf die Stütze verschiebbar sein, so dass der Abstand der Längsachse des Werkzeugs in Bezug auf die Längsachse der Stütze variiert werden kann und so das Werkzeug von einer Position, in der die Längsachsen von Werkzeug und Werkstück nicht identisch sind, in eine Position, in der diese Achsen identisch sind, verschiebbar ist. Durch das Verschwenken bzw. Verschieben der Werkzeugaufnahme in Bezug zu der Stütze lässt sich das Einfügen des Werkzeugs in ein Schrumpffutteral besonders benutzerfreundlich gestalten, da sich die Werkzeugaufnahme beim Erhitzen bzw. Abkühlen des Werkzeugfutterals nicht störend in der Nähe des Futterals befindet.

Weiterhin alternativ kann auch die Stütze selbst in Bezug auf die Werkzeugfutteralaufnahme oder die Werkzeugfutteralaufnahme in Bezug auf die Stütze verschiebbar sein, so dass der Abstand der Längsachsen zwischen Stütze und Werkzeugfutteral variierbar ist. Dadurch lässt sich ebenfalls eine Anpassung der Positioniereinrichtung an verschiedene Werkzeugdurchmesser, die üblicherweise von 3 mm bis 100 mm reichen können, vorgenommen werden.

Auf besonders einfache Weise kann das Werkzeug in der Werkzeugaufnahme positioniert werden, wenn an der Werkzeugaufnahme mindestens ein Anschlagelement vorgesehen ist, dass mindestens einen Anschlag für das Werkzeug bereitstellt, wobei dieser Anschlag die Winkelposition des Werkzeugs in Bezug auf die Werkzeugaufnahme vorgibt oder bestimmt. In diesem Fall wird das Werkzeug, beispielsweise die Schneide eines Drehwerkzeugs, zur Anlage mit dem Anschlag gebracht, wodurch die Winkelposition bei festgelegter Anschlagposition direkt eingestellt wird. Falls der Anschlag dazu vorgesehen ist, die Winkelposition des Werkzeugs auszumessen, kann auch dies durch Anlage an den Anschlag auf einfache Weise direkt erfolgen. Vorteilhaft weist das Anschlagelement dabei sowohl Anschläge für rechts- als auch linksorientierte Werkzeuge auf, beispielsweise für Drehwerkzeuge mit rechts- bzw. linksseitig orientierten Schneiden, wobei unter rechtsseitig orientierten Schneide eine Orientierung verstanden wird, bei der das an einem Außenumfang bearbeitete Werkstück mit dem Uhrzeigersinn an dem Drehwerkzeug vorbeigedreht wird. Je nach dem, welche Orientierung das Werkzeug aufweist, ist dann jeweils einer dieser Anschläge mit dem Werkzeug in Kontakt bringbar. Auf diese Weise ist die Positioniereinrichtung universell für alle möglichen Werkzeuge einsetzbar und schnell an das Werkzeug anpassbar.

Vorteilhaft und sehr genau kann die Winkelposition des Werkzeugs über den Anschlag mit Hilfe einer Mikrometerschraube vorgegeben werden oder mit Hilfe einer Messuhr bestimmt werden. Dabei kann die Mikrometerschraube bzw. die Messuhr selbst direkt den Anschlag bilden oder die Mikrometerschraube wirkt auf das Anschlagelement bzw. die Messuhr bestimmt eine Auslenkung des Anschlagelements.

Damit die Anschläge rasch und sicher geeicht werden können, können ein oder mehrere Eichelemente vorgesehen sein, mit denen die Anschläge in Kontakt bringbar sind. Insbesondere ist es in diesem Zusammenhang sinnvoll, wenn je ein Eichelement für rechts- und linksorientierte Werkzeuge vorgesehen ist. Eine Anpassung der Positionierung an verschiedene Werkzeugdurchmesser und beispielsweise Positionierungen und Geometrien der Schneiden von Drehwerkzeugen erfolgt in einfacher Weise dadurch, dass das Anschlagelement auf der Werkzeugaufnahme in Bezug zu dem Werkzeug verschiebbar angeordnet ist.

Vorteilhafte Weiterbildungen, Kennzeichen und Merkmale der vorliegenden Neuerung werden aus der folgenden Beschreibung in Zusammenhang mit bevorzugten Ausführungsbeispielen deutlich. Dabei zeigen
- Fig. 1: eine bevorzugte Ausführungsform der vorliegenden Positioniereinrichtung,
- Fig. 2: ein Detail der Werkzeugaufnahme und
- Fig. 3: eine alternative Ausführungsform des Anschlagelements der Werkzeugaufnahme.

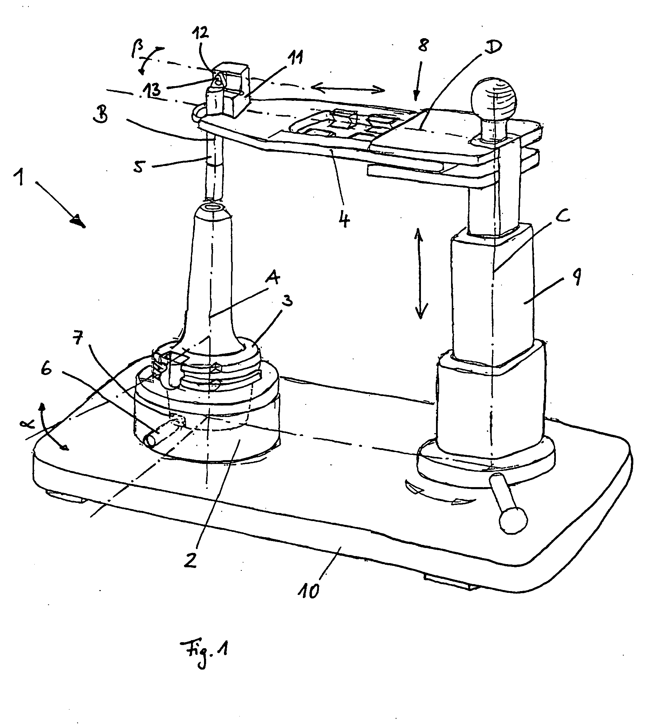

In Fig. 1 ist eine bevorzugte Ausführungsform der vorliegenden Positioniereinrichtung 1 rein schematisch in Perspektive dargestellt. Die Positioniereinrichtung besteht aus einer Werkzeugfutteralaufnahme 2, in der das Werkzeugfutteral 3 aufgenommen ist, und einer Werkzeugaufnahme 4, in der das Werkzeug 5 aufgenommen ist. Die Werkzeugfutteralaufnahme 2 enthält ein Positionierungsmittel 6, beispielsweise einen Stift, der in die Positionierungsmittel des Werkzeugfutterals, im vorliegenden Fall eine Mitnehmer- bzw. Indexnut 7, eingreift und so die Winkelposition α des Werkzeugfutterals 3, das mit seiner Längsachse entlang der Achse A ausgerichtet ist, in Bezug auf die Werkzeugfutteralaufnahme 2 festlegt. Die Werkzeugaufnahme 4 ist über einen geeigneten Auszug 8 mit einer Säule 9 verbunden, deren Längsachse entlang der Achse C ausgerichtet ist. Die Werkzeugfutteralaufnahme 2 und die Säule 9 sind auf einer Grundplatte 10 so befestigt, dass die Achsen A und C parallel zueinander liegen. Die Werkzeugaufnahme 4 ist über den Auszug 8 so mit der Säule 9 verbunden, dass die Längsachse der Werkzeugaufnahme D senkrecht zur Achse C liegt. Das Werkzeug 5 ist in der Werkzeugaufnahme 4 so befestigt, dass die Achse B parallel zur Achse C und zur Achse A und demzufolge senkrecht zur Achse D liegt.

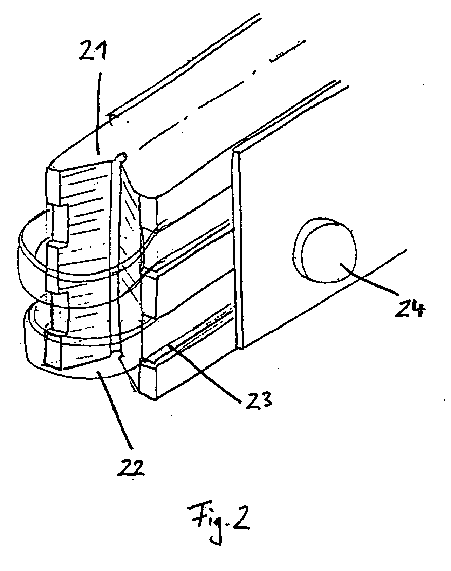

In Fig. 2 ist ein Beispiel eines Kopfes einer Werkzeugaufnahme 4 aufgezeigt, der ein Prisma 21 mit Spannbändern 22 aufweist, die in entsprechenden Nuten 23 des Prismas 21 verlaufen und mittels eines Spannknopfes 24 nach Einfügen eines Werkzeugs 5 an diesem zur Anlage gebracht werden können. Dadurch ist das Werkzeug 5 zwischen dem Prisma 21 und den Spannbändern 22 fixiert. Vor dem Schließen der Spannbänder 22 erfolgt eine Ausrichtung des Werkzeugs 5 dahingehend, dass an einem Anschlagelement 11, das einen Anschlag 12 aufweist, die Schneide 13 des Drehwerkzeugs 5 ausgerichtet wird. Dadurch wird die Winkelposition β des Werkzeugs 5 in Bezug auf die Werkzeugaufnahme 4 festgelegt.

Mit dieser Positioniereinrichtung 1 kann nun auf einfache Weise eine exakte Positionierung des Werkzeugs 5 in dem Werkzeugfutteral 3 vorgenommen werden. Wenn es sich, wie in dem in Fig. 1 dargestellten Beispiel, um ein Schrumpffutteral 3 handelt, wird das Werkzeug 5 in einem ersten Schritt in der Werkzeugaufnahme 4 mit seiner Schneide 13 zur Anlage an den Anschlag 12 des Anschlagelements 11 gebracht und mittels der Spannbänder 22 fixiert. Danach wird die Säule 9, die auf der Grundplatte 10 drehbar befestigt ist, so weit gedreht, dass das Werkzeug 5 aus dem Bereich des Werkzeugfutterals 3 herausgeschwenkt ist. Nun wird mit einer geeigneten Heizapparatur (nicht gezeigt), beispielsweise einer Induktionsspule, das Kopfstück des Werkzeugfutterals 3, in das das Werkzeug 5 eingeführt wird, erwärmt. Bei einer Temperatur von 300 °C bis 380 °C ist der Kopf des Spannfutterals 3 so weit gedehnt, dass das Werkzeug 5, das üblicherweise einen um etwa 500 µm größeren Außendurchmesser aufweist als der Innendurchmesser der Aufnahme des Spannfutterals 3, eingeführt werden kann. Zu diesem Zwecke wird nach dem Entfernen der Heizapparatur die Säule 9 so weit um die Achse C gedreht, bis sich das Werkzeug 5 exakt über der Aufnahme des Werkzeugfutterals 3 befindet, d. h. die Achsen A und B identisch sind. Die Werkzeugaufnahme 4 wird nun durch Absenken der teleskopierbaren Säule 5 abgesenkt und so das Werkzeug 5 in das Spannfutteral 3 eingeführt. Nach Erreichen des Grundes der Aufnahme des Spannfutterals 3 oder einer vorher bestimmten Position, die gegebenenfalls mittels geeigneter Hilfsmittel markiert werden kann, wird das Werkzeug 5 mit der Werkzeugaufnahme 4 so lange in dieser Position gehalten bis das Schrumpffutteral 3 durch Abkühlung auf dem Werkzeug 5 aufgeschrumpft ist. Nun wird das Werkzeug 5 aus der Werkzeugaufnahme 4 gelöst und diese wird durch Ausfahren der teleskopierbaren Säule 9 nach oben angehoben und danach durch Rotieren der Säule 9 aus dem Bereich des Werkzeugfutterals 3 und des Werkzeugs 5 entfernt, so dass das Werkzeugfutteral 3, gegebenenfalls nach zusätzlicher Abkühlung mittels aufsteckbarer Kühlelemente (nicht gezeigt), aus der Werkzeugfutteralaufnahme 2 entnommen werden kann.

Durch die Geometrie der Positioniereinrichtung 1, d. h. die Anordnung der Achsen A, B, C und D zueinander sowie die definierte Festlegung der Winkelposition α des Werkzeugfutterals 3 in der Werkzeugfutteralaufnahme 2 und der Winkelposition β der Schneide 13 des Werkzeugs 5 über den Anschlag 12 in Bezug auf die Werkzeugaufnahme 4 wird eine exakte und reproduzierbare Positionierung des Werkzeugs 5 in dem Werkzeugfutteral 3 erreicht.

Entgegen der in Fig. 1 dargestellten Ausführungsform, in der die Werkzeugaufnahme 4 über einen Auszug 8 an der Säule 9 befestigt ist, kann auch vorgesehen sein, dass die Säule 9 selbst oder/und die Werkzeugfutteralaufnahme 2 gegenüber der Grundplatte 10 aufeinander zu bewegbar sind. Weiterhin kann statt der in Fig. 1 dargestellten teleskopierbaren Säule 9 eine Stütze vorgesehen sein, an der die Werkzeugaufnahme 4 direkt höhenverschiebbar angeordnet ist.

Es ist zu erkennen, dass das Verschwenken der Werkzeugaufnahme 4 gegenüber der Säule 9 bzw. eine Rotation der Säule 9 um die Achse C hauptsächlich dazu dient, einen freien Zugriff auf das Werkzeugfutteral 3 insbesondere bei der Befestigung in der Werkzeugfutteralaufnahme 2 und beim Heizen und Abkühlen eines Schrumpffutterals 3 zu ermöglichen. Dieser freie Zugriff kann jedoch auch genauso gut dadurch ermöglicht werden, dass die Säule 9 so lang ausgebildet ist, dass die Werkzeugaufnahme 4 vertikal ausreichend von dem Werkzeugfutteral 3 entfernt wird, oder dass Säule 9 und/oder Werkzeugfutteralaufnahme 2 in der Grundplatte 10 verschiebbar aufgenommen sind, so dass Werkzeugaufnahme 4 und Werkzeugfutteral 3 horizontal ausreichend von einander entfernt werden können.

Aus Gründen der exakten Einstellbarkeit und somit auch Reproduzierbarkeit wird bevorzugt, dass alle Führungen, also alle Verschiebe- und Drehführungen, der Positioniereinrichtung 1 spielfreie Führungen, insbesondere vorgespannte Kugelroll- oder Wälzlagerführungen, sind.

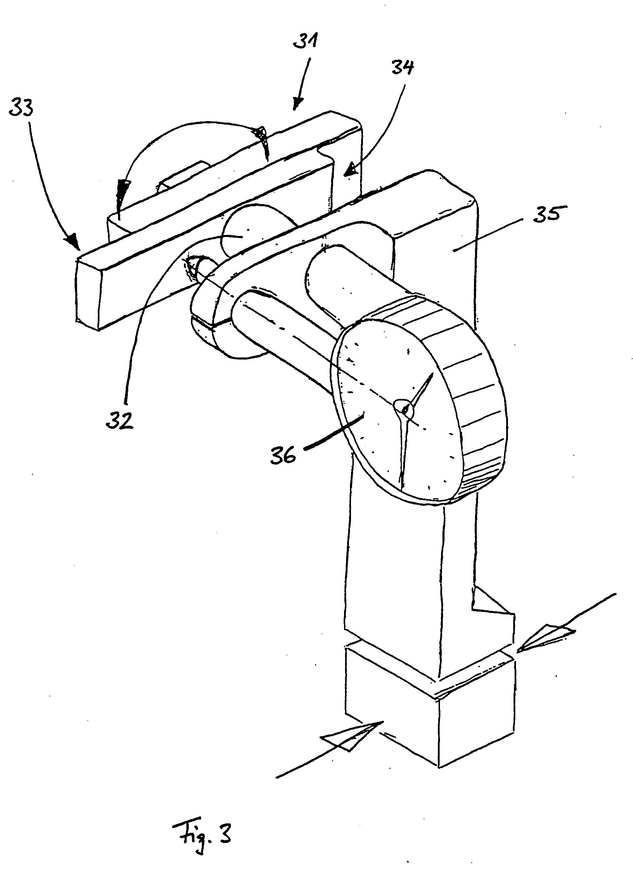

Um die Werkzeugaufnahme 4 an verschiedene Werkzeuggrößen und -formen anzupassen, ist es vorteilhaft, wenn das Anschlagelement 11 verschiebbar auf der Werkzeugaufnahme 4 angeordnet ist. Eine vorteilhafte Ausgestaltung des Anschlagelements 31 ist in Fig. 3 dargestellt. Dabei ist das Anschlagelement 31 auf einer Welle 32 verschiebbar gelagert und weist einen Anschlag 33 für linksorientierte Schneiden und einen Anschlag 34 für rechtsorientierte Schneiden von Drehwerkzeugen auf. Je nach dem, ob ein rechts- oder linksorientiertes Schneidwerkzeug 5 in das Werkstückfutteral 3 eingespannt werden soll, wird der Anschlag 34 oder 33 eingeschwenkt und mit der Schneide 13 des Werkzeugs 5 in Kontakt gebracht.

Die Welle 32 ist in einem Ausleger 35 aufgenommen, der verschiebbar (wie die Pfeile andeuten) auf der Werkzeugaufnahme 4 angeordnet ist. An dem Ausleger 35 ist ebenfalls eine Messuhr 36 angeordnet, die die Auslenkung des Anschlagelements 31 bestimmt. Statt der Messuhr 36 kann auch eine Mikrometerschraube vorgesehen sein, um gewünschte Schneidenpositionen direkt einzustellen und beispielsweise bei der Aufnahme des Werkzeugs 5 in einem Spannfutteral eine gewünschte solche Position einzustellen, dass die beim Verspannen des Spannfutterals aufgrund der Verspannbewegung im inneren des Futterals erfolgende Drehung des Werkzeugs kompensiert wird. Andererseits kann mittels einer solchen Mikrometerschraube auch bewusst eine abweichende Orientierung der Schneide zum Werkstückfutteral 3 eingestellt werden, so dass beim Drehen in der Drehmaschine die Schneide nicht radial an das gedrehte Werkstück herangeführt wird, die Schneide also nicht tangential auf die Werkstückoberfläche einwirkt, sondern eine abweichende Wirkung entfaltet.

Nicht dargestellt in Fig. 3 sind Eichmittel, beispielsweise Eichstäbe, für die Anschläge 33 und 34, um eine Eichung der Messuhr 36 vorzunehmen. Obwohl in den hier dargestellten Ausführungsbeispielen alle Verschiebungs- und Rotationsbewegungen manuell erfolgen, kann es auch vorgesehen sein, dass beispielsweise exakt laufende Linearmotoren vorgesehen sind, um die Positioniervorgänge zu automatisieren. Weiterhin kann es von Vorteil sein, wenn die Werkstückfutteraufnahme 2 ausgetauscht werden kann, um Werkzeugfutterale mit verschiedenen Schnittstellen zur Spindel mit Hilfe der Positioniereinrichtung 1 mit einem Werkzeug 5 versehen zu können. Ebenfalls vorteilhaft ist es in diesem Zusammenhang, wenn die Werkzeugfutteralaufnahme 2 in Bezug zur Grundplatte 10 rotierbar, insbesondere in bestimmten festgelegten Winkelgraden ist. Auf diese Weise kann die Positionierung des Werkzeugs 5 sehr schnell und unkompliziert gegenüber dem Werkzeugfutteral 3 geändert werden, ohne dass die Position des Anschlags 12 in Bezug auf das Werkzeug 5 und die Werkzeugaufnahme 4 verändert werden müsste.

## Patentansprüche

1. Positioniereinrichtung (1) für Span abhebende Werkzeuge, insbesondere Drehwerkzeuge (5), von Span abhebenden Maschinen, wie Dreh- und Fräsmaschinen oder dgl., in Werkszeugfutteralen, insbesondere Spannzangenfutteralen, Klemmfutteralen und Schrumpffutteralen (3), mit einer Aufnahme (2) für das Werkzeugfutteral (3), das erste Positionierungsmittel, insbesondere eine Mitnehmer- bzw. Indexnut (7), aufweist,
wobei in der Werkzeugfutteralaufnahme (2) zweite Positionierungsmittel (6) vorgesehen sind, die die erste Winkelposition (α) des Werkzeugfutterals (3) in Bezug auf die Werkzeugfutteralaufnahme (2) durch Eingriff in die ersten Positionierungsmittel festlegen, wobei das Werkzeugfutteral (3) in der Werkzeugfutteralaufnahme (2) mit seiner Längsachse entlang einer ersten Achse (A) ausgerichtet ist,
**dadurch gekennzeichnet, dass**
eine Werkzeugaufnahme (4) vorgesehen ist, die das Werkzeug (5) in einer zweiten Winkelposition (β) in Bezug auf die Werkzeugaufnahme (4) festlegt,
wobei das Werkzeug (5) mit seiner Werkzeuglängsachse entlang einer zweiten Achse (B) ausgerichtet ist und
die Werkzeugaufnahme (4) in Bezug auf die Werkzeugfutteralaufnahme (2) so beweglich ist, dass das Werkzeug (5) in das Werkzeugfutteral (3) einführbar ist, wobei Werkzeugfutteralaufnahme (2) und Werkzeugaufnahme (4) beim Einführen des Werkzeugs (5) in das Werkzeugfutteral (3) so zu einander angeordnet sind, dass die erste (A) und zweite Achse (B) identisch sind und die zweite Winkelposition (β) in Bezug auf die erste Winkelposition (α) festgelegt ist.

2. Positioniereinrichtung (1) gemäß Anspruch 1,
**dadurch gekennzeichnet, dass**
die Werkzeugaufnahme (4) an einer Stütze (9) angeordnet ist, die entlang einer dritten Achse (C) ausgerichtet ist, wobei die Werkzeugaufnahme (4) entlang der Stütze (9) verschiebbar ist und die erste (A), zweite (B) und dritte Achse (C) zueinander parallel sind.

3. Positioniereinrichtung (1) gemäß Anspruch 1 oder 2,
**dadurch gekennzeichnet, dass**
die Werkzeugaufnahme (4) um die dritte Achse (C) verschwenkbar an der Stütze (9) angeordnet ist oder die Stütze (9) um ihre Längsachse rotierbar ist und so das Werkzeug (5) von einer Position, in der die erste (A) und zweite Achse (B) nicht identisch sind, in eine Position, in der die erste (A) und die zweite Achse (B) identisch sind, verschwenkbar ist.

4. Positioniereinrichtung (1) gemäß einem der Ansprüche 1 bis 3,
**dadurch gekennzeichnet, dass**
die Werkzeugaufnahme (4) in Bezug auf die Stütze (9) verschiebbar ist, so dass der Abstand der zweiten (B) und dritten Achse (C) variierbar ist und so das Werkzeug (5) von einer Position, in der die erste (A) und die zweite Achse (B) nicht identisch sind, in eine Position, in der die erste (A) und die zweite Achse (B) identisch sind, verschiebbar ist.

5. Positioniereinrichtung (1) gemäß einem der vorherigen Ansprüche,
**dadurch gekennzeichnet, dass**
die Stütze (9) in Bezug auf die Werkzeugfutteralaufnahme (2) oder die Werkzeugfutteralaufnahme (2) in Bezug auf die Stütze (9) verschiebbar ist, so dass der Abstand der ersten (A) und dritten Achse (C) variierbar ist und so das Werkzeug (5) von einer Position, in der die erste (A) und die zweite Achse (B) nicht identisch sind, in eine Position, in der die erste (A) und die zweite Achse (B) identisch sind, verschiebbar ist.

6. Positioniereinrichtung (1) gemäß einem der vorherigen Ansprüche,
**dadurch gekennzeichnet, dass**
an der Werkzeugaufnahme (4) mindestens ein Anschlagelement (11; 31) vorgesehen ist, das mindestens einen Anschlag (12; 33, 34) für das Werkzeug (5) bereitstellt, der die zweite Winkelposition (β) des Werkzeugs (5) in Bezug auf die Werkzeugaufnahme (4) vorgibt oder bestimmt.

7. Positioniereinrichtung (1) gemäß Anspruch 6,
**dadurch gekennzeichnet, dass**
das Anschlagelement (31) Anschläge (33, 34) sowohl für rechts- als auch für linksorientierte Werkzeuge (5) aufweist und jeweils einer dieser Anschläge (33, 34) mit dem Werkzeug (5) in Kontakt bringbar ist.

8. Positioniereinrichtung (1) gemäß Anspruch 6 oder 7,
**dadurch gekennzeichnet, dass**
die zweite Winkelposition (β) über den Anschlag (12; 33, 34) mit Hilfe einer Mikrometerschraube vorgegeben wird.

9. Positioniereinrichtung (1) gemäß einem der Ansprüche 6 oder 7,
**dadurch gekennzeichnet, dass**
die zweite Winkelposition (β) über den Anschlag (33, 34) mit Hilfe einer Messuhr (36) bestimmt wird.

10. Positioniereinrichtung (1) gemäß einem der Ansprüche 6 bis 9,
**dadurch gekennzeichnet, dass**
Eichelemente vorgesehen sind, die in Kontakt mit den Anschlägen (12) bringbar sind, um deren Lage in Bezug zur Werkzeugaufnahme (4) zu eichen.

11. Positioniereinrichtung (1) gemäß einem der Ansprüche 6 bis 10,
**dadurch gekennzeichnet, dass**
das Anschlagelement (11; 31) auf der Werkzeugaufnahme (4) in Bezug zu dem Werkzeug (5) verschiebbar angeordnet ist.

12. Positioniereinrichtung (1) gemäß einem der vorherigen Ansprüche, **dadurch gekennzeichnet, dass** das Werkzeug (5) in der Werkzeugaufnahme (4) mittels mindestens einem Spannband (22), Spannbügel mit Fixierschraube, Magnet oder dgl. festgelegt ist.

13. Positioniereinrichtung (1) gemäß einem der vorherigen Ansprüche,
**dadurch gekennzeichnet, dass**
die Werkzeugfutteralaufnahme (2) drehbar auf einer Grundplatte (10) befestigt ist.

14. Positioniereinrichtung (1) gemäß einem der vorherigen Ansprüche,
**dadurch gekennzeichnet, dass**
die Werkzeugfutteralaufnahme (2) an verschiedene Werkzeugfutterale (3) anpassbar bzw. austauschbar ist.

15. Positioniereinrichtung (1) gemäß einem der vorhergehenden Ansprüche,
**dadurch gekennzeichnet, dass**
die Positioniereinrichtung als fester Bestandteil oder auswechselbare Zusatzausrüstung eines Schrumpfgerätes oder Voreinstellgerätes ausgebildet ist.

## Claims

1. Positioning device (1) for chip removing tools, and for turning tools (5) in particular, of chip removing machines such as lathes and mills or the like, in tool chuck sleeves, in particular in collet chuck sleeves, elastic chuck sleeves and shrink fit chuck sleeves (3), with a holder (2) which has first positioning means, in particular a driving or indexing slot (7), for the tool chuck sleeve (3),
wherein second positioning means (6) are provided in the tool chuck sleeve holder (2) which set the first angular position (*alpha*) of the tool chuck sleeve (3) relative to the tool chuck sleeve holder (2) through engagement in the first positioning means, the tool chuck sleeve (3) in the tool chuck sleeve holder (2) being orientated with its longitudinal axis along a first axis (A),
**characterized in that**
a tool holder (4) is provided which sets the tool (5) in a second angular position *(beta)* relative to the tool holder (4), the tool (5) being orientated with its longitudinal axis along a second axis (B), and
the tool holder (4) is movable relative to the tool chuck sleeve holder (2) so that the tool (5) can be inserted into the tool chuck sleeve (3), the tool chuck sleeve holder (2) and tool holder (4) being so disposed with respect to each other on insertion of the tool (5) into the tool chuck sleeve (3) that the first and second axes (A, B) are identical and the second angular position (*beta*) is set relative to the first angular position *(alpha).*

2. Positioning device (1) according to Claim 1,
**characterized in that**
the tool holder (4) is arranged on a support (9) which is orientated along a third axis (C), the tool holder (4) being displaceable along the support (9) and the first, second and third axes (A, B, C) being parallel with each other.

3. Positioning device (1) according to Claim 1 or Claim 2,
**characterized in that**
the tool holder (4) is arranged pivotably about the third axis (C) on the support (9), or the support (9) is rotatable about its longitudinal axis, and the tool (5) is thus pivotable from a position in which the first and second axes (A, B) are not identical to a position in which the first and second axes (A, B) are identical.

4. Positioning device (1) according to any one of Claims 1 to 3,
**characterized in that**
the tool holder (4) is displaceable relative to the support (9) so that the distance between the second and third axes (B, C) is variable, and the tool (5) is thus displaceable from a position in which the first and second axes (A, B) are not identical to a position in which the first and second axes (A, B) are identical.

5. Positioning device (1) according to any of the preceding claims,
**characterized in that**
the support (9) is displaceable relative to the tool chuck sleeve holder (2), or the tool chuck sleeve holder (2) is displaceable relative to the support (9), so that the distance between the first and third axes (A, C) is variable, and the tool (5) is thus displaceable from a position in which the first and second axes (A, B) are not identical to a position in which the first and second axes (A, B) are identical.

6. Positioning device (1) according to any of the preceding claims,
**characterized in that**
at least one abutting element (11; 31) is provided on the tool holder (4) that provides at least one stop (12; 33, 34) for the tool (5) which presets or determines the second angular position *(beta)* of the tool (5) relative to the tool holder (4).

7. Positioning device (1) according to Claim 6,
**characterized in that**
the abutting element (31) has stops (33, 34) for both right- and left-handed tools (5), and either of these stops (33, 34) can be brought into contact with the tool (5).

8. Positioning device (1) according to Claim 6 or Claim 7,
**characterized in that**
the second angular position *(beta)* is preset by the stop (12; 33, 34) with the aid of a micrometer screw.

9. Positioning device (1) according to Claim 6 or Claim 7,
**characterized in that**
the second angular position *(beta)* is determined by the stop (33, 34) with the aid of a dial gauge (36).

10. Positioning device (1) according to any one of Claims 6 to 9,
**characterized in that**
calibrating elements are provided that can be brought into contact with the stops (12) to calibrate their position relative to the tool holder (4).

11. Positioning device according to any one of Claims 6 to 10,
**characterized in that**
the abutting element (11; 31) is arranged displaceably on the tool holder (4) relative to the tool (5).

12. Positioning device (1) according to any of the preceding claims,
**characterized in that**
the tool (5) is fixed in the tool holder (4) by means of at least one band clamp (22), hoop clamp with fixing screw, magnet, or the like.

13. Positioning device (1) according to any of the preceding claims,
**characterized in that**
the tool chuck sleeve holder (2) is mounted rotatably on a base plate (10).

14. Positioning device (1) according to any of the preceding claims,
**characterized in that**
the tool chuck sleeve holder (2) is adaptable to different tool chuck sleeves (3) and/or is interchangeable.

15. Positioning device (1) according to any of the preceding claims,
**characterized in that**
the positioning device is designed as a permanent component or replaceable accessory of a shrinking unit or preadjusting unit.

## Revendications

1. Dispositif de positionnement (1) pour des outils d'usinage, en particulier des outils de tournage (5), de machines d'usinage telles que des tours et des fraiseuses ou similaires, dans des mandrins de serrage, en particulier des mandrins à pince de serrage, des mandrins de serrage et des mandrins de retrait (3) avec un logement (2) pour le mandrin de serrage (3), qui présente des premiers moyens de positionnement, en particulier une rainure d'entraînement axiale ou d'indexage (7),
dans le logement de mandrin de serrage (2) étant prévus des deuxièmes moyens de positionnement (6) qui fixent la première position angulaire (α) du mandrin de serrage (3) par rapport au logement de mandrin de serrage (2) par engagement dans les premiers moyens de positionnement, le mandrin de serrage (3) étant aligné dans le logement de mandrin de serrage (2) avec son axe longitudinal le long d'un premier axe (A),
**caractérisé en ce que**
un porte-outil (4) est prévu, lequel fixe l'outil (5) dans une deuxième position angulaire (β) par rapport au porte-outil (4), l'outil (5) étant aligné avec son axe longitudinal d'outil le long d'un deuxième axe (B) et
le porte-outil (4) est mobile par rapport au logement de mandrin de serrage (2) de telle sorte que l'outil (5) peut être introduit dans le mandrin de serrage (3), le logement de mandrin de serrage (2) et le porte-outil (4) étant disposés lors de l'introduction de l'outil (5) dans le mandrin de serrage (3) l'un par rapport à l'autre de telle sorte que le premier (A) et le deuxième axe (B) soient identiques et la deuxième position angulaire (β) soit fixée par rapport à la première position angulaire (α).

2. Dispositif de positionnement (1) selon la revendication 1,
**caractérisé en ce que**
le porte-outil (4) est disposé sur un support (9) qui est aligné le long d'un troisième axe (C), le porte-outil (4) pouvant être déplacé le long du support (9) et le premier (A), le deuxième (B) et le troisième axe (C) étant parallèles les uns aux autres.

3. Dispositif de positionnement (1) selon la revendication 1 ou 2,
**caractérisé en ce que**
le porte-outil (4) est disposé de manière à pouvoir pivoter autour du troisième axe (C) sur le support (9) ou le support (9) peut pivoter autour de son axe longitudinal et l'outil (5) peut donc pivoter d'une position, dans laquelle le premier (A) et le deuxième axe (B) ne sont pas identiques, dans une position, dans laquelle le premier (A) et le deuxième axe (B) sont identiques.

4. Dispositif de positionnement (1) selon l'une quelconque des revendications 1 à 3,
**caractérisé en ce que**
le porte-outil (4) peut être déplacé par rapport au support (9) de sorte que la distance entre le deuxième (B) et le troisième axe (C) puisse varier et l'outil (5) puisse donc se déplacer d'une position, dans laquelle le premier (A) et le deuxième axe (B) ne sont pas identiques, dans une position, dans laquelle le premier (A) et le deuxième axe (B) sont identiques.

5. Dispositif de positionnement (1) selon l'une quelconque des revendications précédentes,
**caractérisé en ce que**
le support (9) peut se déplacer par rapport au logement de mandrin de serrage (2) ou le logement de mandrin de serrage (2) peut se déplacer par rapport au support (9) de sorte que la distance entre le premier (A) et le troisième axe (C) puisse varier et l'outil puisse donc se déplacer d'une position, dans laquelle le premier (A) et le deuxième axe (B) ne sont pas identiques, dans une position, dans laquelle le premier (A) et le deuxième axe (B) sont identiques.

6. Dispositif de positionnement (1) selon l'une quelconque des revendications précédentes,
**caractérisé en ce que**
sur le porte-outil (4) est prévu au moins un élément de butée (11 ; 31) qui fournit au moins une butée (12 ; 33, 34) pour l'outil (5), laquelle prescrit ou détermine la deuxième position angulaire (β) de l'outil (5) par rapport au porte-outil (4).

7. Dispositif de positionnement (1) selon la revendication 6,
**caractérisé en ce que**
l'élément de butée (31) présente des butées (33, 34) aussi bien pour des outils orientés à droite qu'à gauche et respectivement une de ces butées (33, 34) peut être amenée en contact avec l'outil (5).

8. Dispositif de positionnement (1) selon la revendication 6 ou 7,
**caractérisé en ce que**
la deuxième position angulaire (β) est prescrite par le biais de la butée (12 ; 33, 34) à l'aide d'une vis micrométrique.

9. Dispositif de positionnement (1) selon l'une quelconque des revendications 6 ou 7,
**caractérisé en ce que**
la deuxième position angulaire (β) est déterminée par le biais de la butée (33, 34) à l'aide d'un comparateur-amplificateur (36).

10. Dispositif de positionnement (1) selon l'une quelconque des revendications 6 à 9,
**caractérisé en ce que**
des éléments d'étalonnage sont prévus, lesquels peuvent être amenés en contact avec les butées (12) afin d'étalonner leur position par rapport au porte-outil (4).

11. Dispositif de positionnement (1) selon l'une quelconque des revendications 6 à 10,
**caractérisé en ce que**
l'élément de butée (11 ; 31) est disposé de manière mobile sur le porte-outil (4) par rapport à l'outil (5).

12. Dispositif de positionnement (1) selon l'une quelconque des revendications précédentes,
**caractérisé en ce que**
l'outil (5) est fixé dans le porte-outil (4) au moyen d'au moins une bande de serrage (22), d'étriers de tension avec une vis de fixation, un aimant ou similaires.

13. Dispositif de positionnement (1) selon l'une quelconque des revendications précédentes,
**caractérisé en ce que**
le logement de mandrin de serrage (2) est fixé de manière rotative sur une plaque de base (10).

14. Dispositif de positionnement (1) selon l'une quelconque des revendications précédentes,
**caractérisé en ce que**
le logement de mandrin de serrage (2) peut être adapté à différents mandrins de serrage (3) ou remplacé.

15. Dispositif de positionnement (1) selon l'une quelconque des revendications précédentes,
**caractérisé en ce que**
le dispositif de positionnement est réalisé comme un composant fixe ou un équipement auxiliaire interchangeable d'un appareil de retrait ou d'un appareil de préréglage.
